# EUROPÄISCHE PATENTSCHRIFT

(11) **EP 2 065 116 B1**
(45) Veröffentlichungstag und Bekanntmachung des Hinweises auf die Patenterteilung: **09.04.2014**
(21) Anmeldenummer: 08017791.8
(22) Anmeldetag: 10.10.2008
(51) Int. Cl.: B23K 20/04, B32B 15/01

(54) **Verfahren zur Herstellung eines Reibverbundwerkstoffs**
method of producing a friction compound material
procédé destiné à la fabrication d'une matière composite frictionnelle

(30) Priorität: 15.10.2007 DE 102007049383
(43) Veröffentlichungstag der Anmeldung: 03.06.2009
(73) Patentinhaber: Wickeder Westfalenstahl GmbH, 58739 Wickede / Ruhr (DE)
(72) Erfinder: Lan, Yun, Dr., 58119 Hagen (DE)
(74) Vertreter: Brune, Axel

(56) Entgegenhaltungen:
- EP-A2- 1 850 018
- WO-A1-2008/058032
- GB-A- 1 284 225
- GB-A- 2 316 686
- US-A1- 2003 064 239
- US-B1- 6 322 902
- US-B1- 6 342 306

## Beschreibung

Die vorliegende Erfindung betrifft ein Verfahren zur Herstellung eines Verbundwerkstoffs gemäß Anspruch 1 und ein Verfahren zur Herstellung eines Reibformkörpers aus einem Verbundwerkstoff gemäß Anspruch 13.

Sofern eine reibschlüssige Verbindung zwischen zwei Körpern hergestellt werden soll, bedarf es einer geeignete Reibpaarung. Typische Anwendungsfälle von reibschlüssigen Verbindungen sind beispielsweise Kupplungspaarungen oder Synchronringe im Bereich von Getrieben.

Ein Vollmaterialwerkstoff, der als mechanisches Reibungsteil Anwendung findet und durch Sintern realisiert ist und ferner dafür bestimmt ist, in einer geschmierten Umgebung zu funktionieren, ist beispielsweise aus der DE 699 14 712 T2 bekannt geworden. Dieses aus Bronze oder Messing bestehende Reibungsteil in Form eines Synchronringes zeigt zwar ein gutes Reibungsverhalten mit Stählen. Die Festigkeit und Abnutzungsbeständigkeit des Reibungsteils ist jedoch insbesondere für Anwendungen in Kupplungen oder Getrieben oft nicht ausreichend. Ferner sind die Herstellungsverfahren Schmieden und Sintern relativ zeitaufwendig und verursachen hohe Kosten. Nachteilig in diesem Zusammenhang ist ferner, dass der Werkstoff Messing als solches bereits sehr teuer ist und ferner das Herstellungsverfahren sehr aufwendig ist, so dass zu dem hohen Materialeinkaufspreis hohe Herstellkosten des Synchronrings hinzukommen.

Eine Materialkombination, bestehend aus einem Träger und einem Reibbelag, wobei der Träger aus beispielsweise einem gezogenen oder gesinterten Stahl besteht, und wobei der Reibbelag in der Regel aus organischen Reibwerkstoffen, metallischen Sinterwerkstoffen, CFC (Kohlenstoffmatrix und Kohlenstofffaser) - Materialien besteht, ist beispielsweise aus der DE 101 30 395 A1 und DE 103 34 895 B3 bekannt geworden. Die Gleitteile aus Tragmetallen mit Reibschicht weisen zwar gute Gesamteigenschaften auf, aber aufgrund der Reibschicht ist die Herstellung eines derart beschichteten Gleitteiles aufwendig und damit noch teuer als aus gesinterten KupferLegierungen.

Es sind weiterhin Gleitverbundwerkstoffe, bestehend aus einem Stahlband und einer Reibschicht aus walzplattierter Kupfer-Zink-Legierung (CuZn31Si) aus der EP 0 681 114 B2 bekannt geworden. Ferner sind auch Gleitverbundwerkstoffe aus einem Stahlband und einer Reibschicht aus walzplattierten Aluminium-Legierungen, beispielsweise aus der DE 3327657 A1 und GB 2 270 721 bekannt geworden. Solche Reibschichten aus Kupfer-Zink-Legierung (Messing) oder Al- Legierungen, die auf ein Stahlkernband walzplattiert sind, sind aufgrund der begrenzten Oberflächenhärte häufig für die Anwendungen nicht ausreichend, insbesondere wenn die Bauteile bei Temperatur höher als 300°C wärmebehandelt oder eingesetzt werden müssen.

Zusammenfassend kann festgestellt werden, dass die zur Herstellung einer reibschlüssigen Verbindung vorgeschlagenen Formteile und Materialien einerseits nur in aufwendigen Herstellungsverfahren, wie beispielsweise Schmieden oder Sintern produziert werden können und andererseits zumindest teilweise aus Werkstoffen bestehen, die relativ teuer sind. Der Kostenaspekt tritt besonders in den Vordergrund, wenn Reibformkörper aus einen Vollmaterial der vorgenannten Werkstoffe hergestellt werden. Herkömmliche Stahl-Kupfer-Verbundwerkstoffe bzw. Stahl-Aluminiumverbundwerkstoffe bieten demgegenüber nur eine beschränkte Einsatzmöglichkeit und - dauer, da die Abnutzungsbeständigkeit der aufgebrachten Kupfer- bzw. Aluminiumschichten vergleichsweise beschränkt ist.

Die US 6 322 902 B1 offenbart kupferbasierte und/oder eisenbasierte Kontaktmaterialien mit einer Bleikomponente, die gute Gleiteigenschaften aufweisen sollen.

Die US 2003/0064239 A1 offenbart kupferbasierte gesinterte Gleitmaterialien, die eine Stahlschicht und eine gesinterte Schicht auf Kupfer oder einer kupferbasierten Legierung umfassen.

Die EP 1 850 018 A2 offenbart einen bandförmigen Werkstoffverbund, bei welchem eine Schicht, bestehend aus einer Kupfer-Mehrstofflegierung, mit einer Stützschicht aus Stahl unlösbar verbunden ist.

Eine Aufgabe der vorliegenden Erfindung liegt darin, ein vorteilhaftes Herstellungsverfahren zur Herstellung eines Verbundwerkstoffs vorzuschlagen, welches eine kostengünstige Herstellung des Verbundwerkstoffs ermöglicht.

Erfindungsgemäß wird diese Aufgabe dadurch gelöst, dass eine Auflage aus einer aushärtbaren Kupferlegierung auf mindestens eine Seite eines Trägers aus einem Stahlwerkstoff walzplattiert wird, das so entstandene Zwischenprodukt weichgeglüht wird und das so entstandene Zwischenprodukte Lösungsgeglüht wird. Durch das Weichglühen wird eine gute Haftung zwischen dem Träger und der Auflage zustand gebracht. Der so entstandene Verbund kann ausgezeichnet weiter verformt werden. Um einen idealen Ausscheidungszustand in der Kupferlegierungsauflage zu gewährleisten, wird nach dem Weichglühen ein Lösungsglühen vorgenommen, sodass die Legierungselemente homogen in der Matrix gelöst werden. Dieser Zustand ist eine notwendige Voraussetzung für ein Gefüge mit feinen gleichmäßig verteilten Ausscheidungen wie sie sich beim anschließenden Aushärten einstellen sollen. Durch die Walzplattierung der aushärtbaren Kupferlegierung mit dem Stahlträger und das anschließende Diffusionsglühen wird eine kostengünstige Möglichkeit vorgeschlagen, eine unlösbare Verbindung zwischen der Auflage und dem Träger herzustellen. Durch weiteres Lösungsglühen und ggf. Aushärten des Plattierbandes wird eine hohe Verschleißfestigkeit der Auflage gewährleistet. Das Lösungsglühen wird mit einer Abkühlung unter Schutzgas oder in Wasser bzw. in Öl vorgenommen.

Dadurch, dass es sich bei dem Material der Auflage um eine aushärtbare Kupferlegierung handelt, wird ein Verbundwerkstoff bereitgestellt, der mit der unlösbar aufgebrachten Auflage aus einer aushärtbaren Kupferlegierung eine vorteilhafte Reibschicht zur Verfügung stellt, die wahlweise vor oder nach der Umformung des Verbundwerkstoffs zu einem Reibformkörper in eine gehärtete Kupferschicht umgewandelt werden kann, so dass eine hochfeste und abnutzungsbeständige Reibschicht entsteht. Eine aushärtbare Kupferlegierung weist bereits aufgrund der feinen Ausscheidungen eine höhere Oberflächenhärte auf und ist temperaturbeständig, so dass das Einsatzgebiet des Verbundwerkstoffs gegenüber einem Verbundwerkstoff mit einer herkömmlichen Kupferauflage wesentlich erweitert ist.

In einer vorteilhaften Ausgestaltung des vorgeschlagenen Verbundwerkstoffs kann vorgesehen sein, dass es sich bei dem Träger um ein flaches Stahlprodukt handelt. Als Träger des Verbundwerkstoffes sind zwar grundsätzlich beliebige Formen des Trägers vorstellbar. Unter produktionstechnischen Aspekten bietet sich jedoch ein flaches Stahlprodukt, beispielsweise ein Bandstahl, an, da dieser dem Herstellungsprozess des Walzplattierens quasikontinuierlich von einer Bandstahlrolle zugeführt werden kann.

Darüber hinaus bietet sich die flache Form als Ausgangsgeometrie für eine Vielzahl von Anwendungsfällen an.

Es kann weiterhin vorteilhafterweise vorgesehen sein, dass es sich bei dem Material des Trägers um C-Stahl, einen warmfesten Stahl, einen Einsatzstahl oder einen Nitrierstahl handelt, insbesondere um einen NiCr- bzw. CrNi- Stahl, MnCr- Stahl, vorzugsweise 16MnCr-5, CrNiMo- Stahl, Mn- , MnCr- oder MnSi- Stahl oder NiCrMo- Stahl. Solche Stähle weisen insgesamt gute mechanische Eigenschaften auf und ermöglichen durch eine entsprechende Wärmebehandlung eine hohe Oberflächehärte (HV>400). Aus einer entsprechenden Glühatmosphere stammende Stickstoff- bzw. Kohlenstoffatome diffundieren bei Temperaturen von 380-600°C in die Stahloberfläche ein und bilden dabei durch Reaktion mit Eisen harte Eisennitrid (Fe-N)- bzw. Fe-(N, C)-Schichten. Dadurch wird die Verschleißfestigkeit, Gleiteigenschaften, Temperatur- bzw. Korrosionsbeständigkeit der Stahloberfläche deutlich verbessert.

In einer weiteren vorteilhaften Ausgestaltung des vorgeschlagenen Verbundwerkstoffs kann vorgesehen sein, dass der Träger mit einem Dickenanteil von 60 bis 95% bezogen auf die Gesamtdicke des Verbundwerkstoffs aufweist, um ausreichende Gesamtfestigkeit des Bauteils kostengünstig darstellen zu können.

Um eine feste und unlösbare Verbindung zwischen dem Träger und der Auflage zu gewährleisten ist es von Vorteil, dass es sich bei der Auflage um eine auf den Träger aufplattierte Folie handelt. Insbesondere durch das Walzplattieren und das anschließende Diffusionsglühen kann eine rationell herstellbare und unlösbare Verbindung zwischen dem Stahlwerkstoff und dem Kupferwerkstoff geschaffen werden.

In einer weiteren vorteilhaften Ausgestaltung des Verbundwerkstoffes kann vorgesehen sein, dass die Auflage eine Dicke von mindestens 30µm aufweist, um eine ausreichende Reibschichtdicke für die Gesamtlebensdauer des Bauteils zur Verfügung zu stellen.

Vorteilhafterweise kann weiterhin vorgesehen sein, dass es sich bei der Auflage um eine aushärtbare Cu-Legierung aus den Legierungssystemen CuNiSi- oder CuNiSiMg- Legierungen, Cu-Cr-Legierungen, Cu-Fe- oder Cu-(Fe, Co, Ni)-P- Legierungen, oder CuBe- bzw. CuMg- Legierungen handelt. Solche Cu- Legierungen weisen gute Reibeigenschaften in Kontakt mit Stahl auf. Ferner besitzen sie aufgrund der Ausscheidungshärtung ebenfalls eine hohe Verschleißfestigkeit sowie eine gute Temperaturbeständigkeit. Durch entsprechende Wärmebehandlung (Lösungsglühen und Aushärten) kann das gewünschte Gefüge in den obengenanten Cu - Legierungen eingestellt werden. Bei dem Lösungsglühen knapp unterhalb der eutektischen Temperatur der entsprechenden Cu- Legierung werden die Legierungselemente homogen in der Matrix gelöst, anschließend wird schnell abgekühlt, damit die im Gitter gelösten Atome keine Gelegenheit haben durch Diffusion ihre Gitterplätze wieder zu verlassen. Beim anschließenden Auslagern oder Aushärten wird durch gezielte Temperaturführung eine Diffusion der Atome ermöglicht wodurch sich feine, gleichmäßig verteilte Ausscheidungen bilden. Dieses Gefüge gewährleistet eine gute Verformbarkeit, hohe Festigkeit und hohe Temperaturbeständigkeit.

In einer weiteren vorteilhaften Ausgestaltung des vorgeschlagenen Verbundwerkstoffes kann vorgesehen sein, dass der Verbundwerkstoff eine Gesamtdicke von z.B. 0,1 bis 6mm aufweist, sodass er für verschiedene Bauteile und Bauteilausführungen eingesetzt werden kann.

Es kann weiterhin vorteilhafterweise vorgesehen sein, dass der Träger in Form eines Flachbandes einseitig mit einer Auflage ausgestattet ist. Ein derartig ausgestalteter Verbundwerkstoff eröffnet die Möglichkeit zur Oberflächenbehandlung des Trägers, insbesondere kann der Träger aus einem Stahlwerkstoff durch Nitrieren oder Nitrocarburieren im Bereich seiner Oberfläche gehärtet werden, wodurch die mechanische Widerstandsfähigkeit und Festigkeit des Verbundwerkstoffs insgesamt erhöht werden kann.

In einer bevorzugten Ausführungsform kann vorgesehen sein, dass die Auflage in gehärteter Form vorliegt und eine Oberflächenhärte von mindestens 170 HV aufweist. Zwar kann es von Vorteil sein, wenn der Verbundwerkstoff in einem ungehärteten Zustand der aushärtbaren Kupferlegierung vorliegt, da die Umformung zu einem Reibformkörper vergleichsweise einfach und kostengünstig möglich ist, jedoch wird unter Umständen auch eine Auslieferung des Verbundwerkstoffs mit einer gehärteten Auflage gewünscht, wenn beispielsweise eigene Möglichkeiten des Kunden zur Wärmebehandlung des Verbundwerkstoffs nicht gegeben sind. Dennoch bietet auch ein Verbundwerkstoff mit einer gehärteten Kupferauflage geeignete Möglichkeiten der Umformung. Es ist festgestellt worden, dass beispielsweise auch eine Umformung des Verbundwerkstoffes mit gehärteter Kupferauflage durch Tiefziehen möglich ist. Dies ermöglicht eine ideale Aushärtung bzw. höchste Festigkeit der Kupferauflage, wenn die weitere Wärmebehandlung des Bauteils bei einer Temperatur <560°C oder bei einer dauerhaften Temperaturbelastung <500°C liegt.

In einer weiter bevorzugten Ausführungsform des vorgeschlagenen Verbundwerkstoffs kann vorgesehen sein, dass der Träger eine Oberflächenhärte von mindestens 400 HV aufweist. Dies gewährleistet eine hohe Verschleißfestigkeit, gute Gleiteigenschaften sowie eine hohe Temperatur- und Korrosionsbeständigkeit der Stahloberfläche.

Es kann vorteilhafterweise vorgesehen sein, dass vor dem Walzplattieren eine Vorbehandlung des Materials stattfindet, insbesondere eine mechanische Aktivierung der Plattieroberfläche durch Reinigen und Aufrauhen. Durch die Vorbehandlung können die Oberfläche des Trägers optimal auf die Bedürfnisse des Walzplattierens mit einer ebenfalls vorbehandelten Auflage aus einer aushärtbaren Kupferlegierung vorbereitet und eine gute Haftung zwischen dem Träger und der Auflage gewährleistet werden.

Es kann weiterhin vorteilhafterweise vorgesehen sein, dass vor dem Lösungsglühen eine Walzung, insbesondere eine Kaltwalzung des Zwischenproduktes, vorzugsweise auf eine Dicke von 0,1-6mm stattfindet.

Es kann weiterhin vorteilhafterweise vorgesehen sein, dass es sich bei dem Träger um ein Stahl-Flachprodukt, insbesondere mit einer Dicke von 0,5 bis 8mm, vor dem Walzplattieren, handelt, um eine Enddicke von z.B. 0,1 bis 6mm mit einem Dickenanteil des Stahlträgers von 60 bis 95% zu gewährleisten und diesen günstig zu produzieren.

In einer weiteren vorteilhaften Ausgestaltung des vorgeschlagenen Verfahrens kann vorgesehen sein, dass es sich bei der Auflage um eine Folie aus einer aushärtbaren Kupferlegierung mit einer Dicke von 0,05 bis 3mm, vor dem Walzplattieren, handelt, um im Fertigzustand eine ausreichende Reibschichtdicke (>30µm) für die gesamte Lebensdauer des Bauteils zu gewährleisten.

Darüber hinaus kann weiterhin vorteilhafterweise vorgesehen sein, dass der Gesamtumformgrad der Werkstoffe während des Walzplattierens etwa 30-90% beträgt, um eine möglichst gute Haftung zwischen dem Träger und der Auflage bereits vor der Glühbehandlung zu gewährleisten.

Es kann weiterhin vorteilhafterweise vorgesehen sein, dass das Diffusions- bzw. Weichglühen in einem Haubenofen bei Glühtemperaturen von 500-800°C für eine Dauer von 0,5-30h oder in einem Durchlaufofen bei Glühtemperaturen von 550-950°C für eine Dauer von 0,1-10min stattfindet. Dadurch wird aufgrund der Atomdiffusion eine gute Haftung zwischen dem Träger und der Auflage erzeugt und gleichzeitig die Kaltverfestigung durch die Verformung beim Plattieren abgebaut. Der Verbund kann anschließend weiter gewalzt oder zu einem Bauteil umgeformt werden.

In einer vorteilhaften Weiterbildung des vorgeschlagenen Verfahrens kann vorgesehen sein, dass die Auflage nach dem Lösungsglühen gehärtet wird. Entsprechend wird ein Verbundwerkstoff bereitgestellt, der herstellerseitig bereits mit einer gehärteten, hochfesten und abnutzungsbeständigen Reiboberfläche ausgestattet ist. Entsprechend muss eine Ausscheidungshärtung der Auflage nicht mehr beim Bauteilfertiger vorgenommen werden, wenn dieses Bauteil aus dem Verbundwerkstoff, beispielsweise durch Tiefziehen, hergestellt wird.

Es kann weiterhin vorteilhafterweise vorgesehen sein, dass das Härten der Auflage bei einer Temperatur von 300-600°C für eine Dauer von 1-20h stattfindet. Dieser Zeit- und Temperaturbereich ermöglicht eine optimale Ausscheidungshärtung für die verwendeten Cu- Legierungen.

In einer weiteren vorteilhaften Ausgestaltung des vorgeschlagenen Verfahrens kann vorgesehen sein, dass das Aushärten der Auflage in einem Haubenofen stattfindet, da dieser für den Ausscheidungsprozess besser geeignet und kostengünstig ist.

In einer vorteilhaften Ausgestaltung des vorgeschlagenen Verfahrens kann vorgesehen sein, dass der Träger zumindest abschnittsweise nicht mit einer Auflage walzplattiert wird, insbesondere der Träger in Form eines Stahl-Flachproduktes, je nach Anwendungsfall, nur einseitig mit einer Auflage walzplattiert wird. Dadurch, dass der Stahl des Trägers zumindest abschnittsweise frei liegt, ist der Träger für eine Oberflächenbehandlung zugänglich, so dass die Stahloberfläche beispielsweise gehärtet werden kann, wodurch das Verbundmaterial für verschiedene Bauteile geeignet ist und die mechanische Widerstandsfähigkeit und Festigkeit insgesamt erhöht werden kann.

In einer vorteilhaften Ausgestaltung des Verfahrens kann vorgesehen sein, dass eine Härtung der freiliegenden Oberfläche des Trägers durch Nitrieren oder Nitrocarburieren bei der Temperatur < 580°C vorgenommen wird. So wird die Härte der Stahloberfläche deutlich erhöht und ohne die Eigenschaften der ausgehärteten Cu-Oberfläche nennenswert zu verschlechtern.

Eine weitere Aufgabe der vorliegenden Erfindung liegt darin, ein vorteilhaftes Verfahren zur Herstellung eines Reibformkörpers aus einem Verbundwerkstoff vorzuschlagen. Erfindungsgemäß wird diese Aufgabe dadurch gelöst, dass die Ausscheidungshärtung der Auflage kombiniert mit der Oberflächehärtung des Trägers nach der Umformung des Verbundwerkstoffs zu einem Reibformkörper stattfindet. Insbesondere wenn die Ausscheidungshärtung der Cu-Auflage des einseitig plattierten Bandes kombiniert mit dem Nitrieren, bei der Temperatur < 580°C, direkt an fertigen Bauteilen durchgeführt wird, werden die Fertigungskosten weiter reduziert und die Umformbarkeit optimiert. Beim Nitrieren bildet sich eine harte Eisennitriedschicht auf der Stahloberfläche und gleichzeitig scheiden sich die in Matrix gelösten Legierungselemente in der Cu-Auflage als feine gleichmäßig verteilte Teilchen aus. Dabei erlangen die Bauteile eine hohe Härte sowohl auf der Stahloberfläche als auch in der Cu-Auflage. Diese Vorgehensweise ist für komplizierte Bauteilformen besonders geeignet, da die Aushärtung der Cu- Auflage erst nach der Bauteilformung erfolgt.

Weitere Merkmale und Vorteile, technische Wirkung der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Darstellung des Verbundwerkstoffs in einer Querschnittsansicht mit einseitiger Auflage;
- Fig. 2: eine schematische Darstellung des Verbundwerkstoffs in einer Querschnittsansicht mit beidseitiger Auflage;
- Fig. 3: eine schematische Darstellung des Herstellungsverfahrens eines Verbundwerkstoffs.

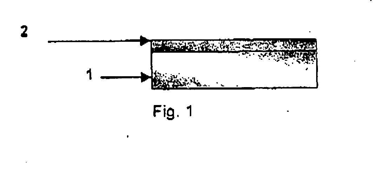

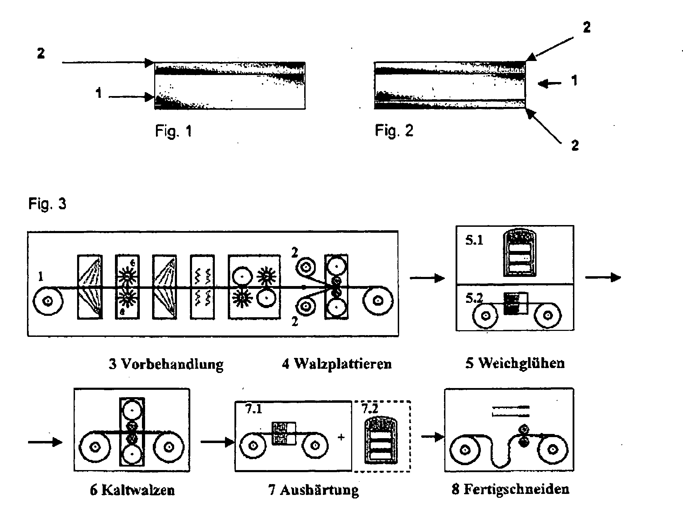

Zunächst wird auf Fig. 1 Bezug genommen.

Ein Verbundwerkstoff umfasst im Wesentlichen einen Träger 1 und mindestens eine Auflage 2.

Als Materialien für den Träger 1 kommen insbesondere Stähle, vorzugsweise Stähle mit hoher Festigkeit wie z.B. 16MnCr5, C-Stähle, Nitrierstähle oder Warmfeststähle in Frage.

Als Materialien für die Auflage 2 kommen vorzugsweise aushärtbare Cu-Legierungen, wie z.B. CuNiSi- bzw. CuNiSiMg- Legierungen, CuBe- oder CuMg- Legierungen, Cu-Cr-Legierungen, Cu-Fe-Legierungen, Cu-(Fe, Co, Ni)-P- Legierungen in Frage, die aufgrund der feinen Ausscheidungen höhere Oberflächenhärte aufweisen und temperaturbeständig sind.

Ein bevorzugtes Herstellungsverfahren für einen Verbundwerkstoff gestaltet sich, unter Bezugnahme auf die Fig. 3, wie folgt.

Schritt 1 - Vorbehandlung (3): Ein Stahlband mit einer Dicke von 0,5-8mm wird vorbehandelt bzw. gereinigt und mechanisch aufgerauht.

Schritt 2 - Walzplattieren (4): Das vorbehandelte Stahlband wird mindestens einseitig mit einer ebenfalls vorbehandelten Folie, die vorzugsweise eine Dicke von 0,05-3,0mm aufweist und aus einer der obengenannten Cu- Legierungen besteht, mit einer für eine gute Haftung notwendigen Verformung von 30-90% walzplattiert.

Schritt 3 - Weichglühen (5): Es erfolgt ein Weichglühen des so entstandenen Zwischenprodukts im Haubenofen (5.1) bei Glühtemperaturen von 500-800°C für eine Dauer von 0,5-30h oder im Durchlaufofen (5.2) bei Glühtemperaturen von 550-950°C für eine Dauer von 0,1-10min.

Schritt 4 - optionales Kaltwalzen (6): Gegebenfalls erfolgt eine weitere Walzung des weichgeglühten Zwischenproduktes auf eine Enddic.ke von 0,1-6mm.

Schritt 5 - Lösungsglühen (7.1: Lösen der Legierungselemente in der Matrix der Cu-Auflage bzw. Vorbreitung der Ausscheidungshärtung): es erfolgt ein Lösungsglühen des Zwischenproduktes im Durchlaufofen bzw. Haubenofen mit schneller Abkühlung unter Schutzgas oder in Wasser bzw. in Öl.

Schritt 6 - optionales Aushärten (7.2: Ausscheiden der in Matrix gelösten Legierungselemente als feine und gleichmäßig verteilte Teilchen) der Auflage: Gegebenenfalls erfolgt ein Aushärten der Auflage 2 im Haubenofen bei einer Temperatur zwischen 300-600°C für eine Dauer von 1-20h oder ein Aushärten kombiniert mit einer weiteren Oberflächenhärtung der Auflage 2, beispielsweise durch Nitrieren.

Schritt 7 - Fertigschneiden (8): Es erfolgt ein Fertigschneiden des so entstandenen bandförmigen Verbundwerkstoffs in den gewünschten Abmessungen.

In einer Versuchsreihe wurde ein bekannter Verbundwerkstoff (nachfolgend PV) mit einem Stahlband 16MnCr-5 als Träger 1 und einem Messing CuZn36 als plattierte Auflage 2 mit einem Verbundwerkstoff (nachfolgend PE) mit einem Stahlband 16MnCr-5 als Träger 1 und einer aushärtbaren Kupferlegierung CuNi3Si1 Mg als plattierte Auflage 2 verglichen.

Die entsprechende chemische Zusammensetzung wird in Tabelle 1 - Kern und Tabelle 2 - Auflage 2 dargestellt.

**Tab. 1 Chemische Zusammensetzung des Kernbandwerkstoff 16MnCr5 (Mass.%)**

| C | Si | Mn | P | S | Al | Cu | Cr | Ni | Fe |
|---|---|---|---|---|---|---|---|---|---|
| 0,15 | 0,07 | 1,02 | 0,012 | 0,0005 | 0,036 | 0,03 | 0,9 | 0,04 | Rest |

**Tab. 2 Chemische Zusammensetzung der Auflagenwerkstoffe (Mass.%)**

| Werkstoff | Zn | Pb | Fe | Mn | Ni | Si | Mg | Al | Sn | Cu |
|---|---|---|---|---|---|---|---|---|---|---|
| CuZn36 | 36,06 | 0,009 | 0,0187 | - | 0,0121 | - | - | 0,001 | 0,0241 | Rest |
| CuNi3Si1Mg | 0,0893 | 0,0001 | 0,0122 | 0,0012 | 2,5599 | 0,5032 | 0,1035 | - | - | Rest |

Aus dem Verbundwerkstoff PV sind zwei Vergleichsproben PV1 und PV2 gefertigt worden. Die Probe PV1 wurde weichgeglüht, wohingegen die Probe PV2 weichgeglüht und an Enddicke kaltgewalzt PV2 worden ist.

Aus dem Verbundwerkstoff PE sind nach dem Walzplattieren, Weichglühen und Kaltwalzen zwei erfindungsgemäße Proben PE1 und PE2 abgeteilt worden. PE1 wurde lediglich lösungsgeglüht. Die Probe PE2 wurde sowohl lösungsgeglüht als auch deren Auflage 2 ausgehärtet. Zur verbesserten Übersicht sind die Proben und die vollzogenen Verfahrensschritte in Tabelle 3 zusammengefasst.

**Tab. 3 Einsatzmateriallen und Fertigungen**

| Probe | Träg-material Dicke mm | Auflage 2-material Dicke mm | Plattieren | Weichglühen | Walzen | Lösungsglühen | Aushärten |
|---|---|---|---|---|---|---|---|
| PV1 | 16MnCr5 6,0mm | CuZn36 0,6mm | ja | ja | nein | - | - |
| PV2 | 16MnCr5 6,0mm | CuZn36 0,6mm | ja | ja | ja | - | - |
| PE1 | 16MnCr5 6,0mm | CuNi3Si1Mg 0,8mm | ja | ja | ja | ja | nein |
| PE2 | 16MnCr5 6,0mm | CuNi3Si1Mg 0,8mm | ja | ja | ja | ja | ja |

In Tabelle 4 sind für die Vergleichsproben PV1 und PV2 sowie die erfindungsgemäßen Proben PE1 und PE2 die Dehngrenze Rp0,2, die Zugfestigkeit Rm, die Bruchdehnung A80 und die Oberflächenhärte HV10 sowohl des Trägers 1 (HV10 Stahl) als auch der Auflage 2 (HV10 Cu-Legierung) angegeben.

**Tab. 4. Mechanische Eigenschaften der Vergleichsproben und der erfindungsgemäßen Proben**

| Probe | Dicke mm | Rp0,2 MPa | Rm MPa | A80 % | HV10 Stahl | HV10 Cu-Legierung |
|---|---|---|---|---|---|---|
| PV1 | 2,203 | 274 | 422 | 30,3 | 132 | 100 |
| PV2 | 2,02 | 419 | 457 | 19,7 | 151 | 115 |
| PE1 | 2,066 | 323 | 505 | 29 | 145 | 90 |
| PE2 | 2,062 | 346 | 534 | 23 | 150 | 199 |

Eine Erhöhung der Oberflächenhärte des Trägers 1 aus Stahl kann durch Nitrieren oder Nitrocarburieren durchgeführt werden, sofern der Träger 1 nur einseitig mit einer Auflage 2 plattiert ist. Diesbezüglich wurde die Probe PE1 weiter bei 500, 540 und 580°C, je 170min mit Atmosphäre NH₃ + N₂ nitriert und eine Probe PE1.1 erzeugt. Um die Temperaturbeständigkeit der ausgehärteten Probe PE2 bei weiterer Nitrierbehandlung zu beurteilen, wurde PE2 weiter bei 580°C, 170min ohne Nitriergas geglüht und eine Probe PE2.1 erzeugt. Die Ergebnisse der Härtemessung nach dem Nitrieren wurden in Tab. 5 dargestellt.

**Tabelle 5 Oberflächenhärte von Proben PE1 nach dem Nitrieren und PE2 nach Nitriersimulation (ohne Nitrieratmosphäre)**

| **Nitrieren bzw. Nitriersimulatlon** | **Härtemessung an Cu-Seite / HV10** | | **Härtemessung an Stahl-Seite /HV10** |
|---|---|---|---|
| | **PE1.1** | **PE2.1** | **PE1.1** |
| 500°C / 170min | 199 | - | 453 |
| 540°C / 170min | 175 | - | 593 |
| 580°C / 170min | 151 | 163 | 542 |

Tabelle 5 zeigt, dass die erfindungsgemäßen Proben PE1.1 und PE2.1 eine höhere Oberflächenhärte sowohl an Cu-Seite (HV10~199) als auch an Stahl-Seite (HV10~453) aufweisen können. Die Härte von Cu-Seite ist relativ temperaturstabil (PE2.1: HV~163 nach dem Glühen bei 580°C / 170min).

Die wichtigen Eigenschaften aller Proben wurden zusammenfassend in Tab. 6 dargestellt.

**Tabelle 6 Wichtige Eigenschaften aller Versuchsproben**

| **Probe** | **Umformbar** | **Reibeigenschaft** | **AbnutzungsBeständigkeit** | **Festigkeit** |
|---|---|---|---|---|
| | | **(Cu-Schicht)** | **(Cu-Schicht)** | **(Stahl-Band)** |
| PV1 | Ja | gut | schlecht | gut |
| PV2 | Ja | gut | schlecht | gut |
| PE1 bzw. PE1.1 | Ja | gut | gut | gut |
| PE2 bzw. PE2.1 | Ja | gut | gut | gut |

Der Verbundwerkstoff weist eine Kombination von Eigenschaften auf, die ihn als Werkstoff für hochbeanspruchte Reibformteile, wie beispielsweise Synchronringe in Getrieben, prädestiniert. Hier ist insbesondere ein Verbundwerkstoff zu nennen, der eine aushärtbare, aber noch nicht ausgehärtete Auflage 2 aufweist. Ein derartiger Verbundwerkstoff kann sehr unproblematisch, beispielsweise durch Tiefziehen, zu einem Formteil, beispielsweise zu einem Synchronring, umgeformt werden. Es muss beispielsweise nicht auf aufwendige Verfahren wie Sintern oder Schmieden zurückgegriffen werden, wie sie beispielsweise bei der Herstellung von Synchronringen aus Kupfer- oder Messingvollmaterial gemäß dem vorbekannten Stand der Technik zur Anwendung kommen. Anschließend kann eine Härtung der Auflage 2 vorgenommen werden, so dass eine hochfeste und abnutzungsbeständige und temperaturbeständige Reibschicht entsteht, die gleichzeitig gute Reibeigenschaften aufweist und insbesondere auch für dauerhafte Hochtemperaturanwendungen bis etwa 500°C geeignet ist. Ferner kann durch den Träger 1 aus Stahl bereits per se und durch ein weiteres Oberflächenhärten des Trägers 1 , beispielsweise durch Nitrieren (Nitridieren) oder Nitrocarburieren, eine hohe mechanische Festigkeit des Verbundwerkstoffs insgesamt sichergestellt werden.

## Patentansprüche

1. Verfahren zur Herstellung eines Verbundwerkstoffs, umfassend einen Träger (1) und mindestens eine fest mit dem Träger (1) verbundene Auflage (2), wobei
- es sich bei dem Material des Trägers (1) um einen Stahlwerkstoff handelt, wobei
- es sich bei dem Material der Auflage (2) um eine aushärtbare Kupferlegierung handelt,
umfassend die nachfolgenden Verfahrensschritte:
a) Walzplattieren der Auflage (2) auf mindestens eine Seite des Trägers (1);
b) Weichglühen des gemäß Verfahrenschritts a) entstandenen Zwischenproduktes;
c) Lösungsglühen des gemäß Verfahrensschritt b) entstandenen Zwischenprodukts,
**dadurch gekennzeichnet, dass** das Lösungsglühen mit einer Abkühlung unter Schutzgas oder in Wasser bzw. in Öl durchgeführt wird.

2. Verfahren zur Herstellung eines Verbundwerkstoffs gemäß einem der vorhergehenden Ansprüche, **dadurch gekennzeichnet, dass** vor dem Walzplattieren eine Vorbehandlung des Trägers (1) und der Auflage (2) stattfindet.

3. Verfahren zur Herstellung eines Verbundwerkstoffs gemäß einem der vorhergehenden Ansprüche, **dadurch gekennzeichnet, dass** vor dem Lösungsglühen eine Walzung auf eine Dicke von 0,1-6mm stattfindet.

4. Verfahren zur Herstellung eines Verbundwerkstoffs gemäß einem der vorhergehenden Ansprüche, **dadurch gekennzeichnet, dass** es sich bei dem Träger (1) um ein Stahl-Flachprodukt mit einer Dicke von 0,5 bis 8mm vor dem Walzplattieren handelt.

5. Verfahren zur Herstellung eines Verbundwerkstoffs gemäß einem der vorhergehenden Ansprüche, **dadurch gekennzeichnet, dass** es sich bei der Auflage (2) um eine Folie aus einer aushärtbaren Kupferlegierung mit einer Dicke von 0,05 bis 3mm vor dem Walzplattieren handelt.

6. Verfahren zur Herstellung eines Verbundwerkstoffs gemäß einem der vorhergehenden Ansprüche, **dadurch gekennzeichnet, dass** der Umformgrad der Folie während des Walzplattierens etwa 30-90% beträgt.

7. Verfahren zur Herstellung eines Verbundwerkstoffs gemäß einem der vorhergehenden Ansprüche, **dadurch gekennzeichnet, dass** das Weichglühen in einem Haubenofen bei Glühtemperaturen von 500-800°C für eine Dauer von 0,5-30h oder in einem Durchlaufofen bei Glühtemperaturen von 550-950°C für eine Dauer von 0,1-10min stattfindet.

8. Verfahren zur Herstellung eines Verbundwerkstoffs gemäß einem der vorhergehenden Ansprüche, **dadurch gekennzeichnet, dass** die Auflage (2) nach dem Lösungsglühen gehärtet wird.

9. Verfahren zur Herstellung eines Verbundwerkstoffs gemäß einem der vorhergehenden Ansprüche, **dadurch gekennzeichnet, dass** das Härten der Auflage (2) bei einer Temperatur von 300-600°C für eine Dauer von 1-20h stattfindet.

10. Verfahren zur Herstellung eines Verbundwerkstoffs gemäß einem der vorhergehenden Ansprüche, **dadurch gekennzeichnet, dass** das Härten der Auflage (2) in einem Haubenofen stattfindet.

11. Verfahren zur Herstellung eines Verbundwerkstoffs gemäß einem der vorhergehenden Ansprüche, **dadurch gekennzeichnet, dass** der Träger (1) zumindest abschnittsweise nicht mit einer Auflage (2) walzplattiert wird.

12. Verfahren zur Herstellung eines Verbundwerkstoffs gemäß einem der vorhergehenden Ansprüche, **dadurch gekennzeichnet, dass** eine Härtung des Trägers (1) durch Nitrieren oder Nitrocarburieren bei einer Temperatur zwischen 380 und 580°C über eine Zeit von 170min unter einer Atmosphäre NH₃ + N₂ stattfindet.

13. Verfahren zur Herstellung eines Reibformkörpers aus dem, gemäß einem der vorhergehenden Ansprüche hergestellten Verbundwerkstoff umfassend einen Träger (1) und mindestens eine fest mit dem Träger (1) verbundene Auflage (2), wobei
- es sich bei dem Material des Trägers (1) um einen Stahlwerkstoff handelt, wobei
- es sich bei dem Material der Auflage (2) um eine aushärtbare Kupferlegierung handelt,
**dadurch gekennzeichnet, dass**
die Ausscheidungshärtung der Auflage (2) kombiniert mit der Oberflächehärtung des Trägers (1) nach der Umformung des Verbundwerkstoffs zum Reibformkörper stattfindet.

## Claims

1. Process for producing a composite material, comprising a substrate (1) and at least one layer (2) fixedly connected to the substrate (1), wherein
- the material of the substrate (1) is a steel material, wherein
- the material of the layer (2) is a hardenable copper alloy,
comprising the following process steps:
a) roll cladding the layer (2) onto at least one side of the substrate (1);
b) soft annealing the intermediate product formed as per process step a);
c) solution annealing the intermediate product formed as per process step b),
**characterized in that** the solution annealing is carried out with cooling under inert gas or in water or in oil.

2. Process for producing a composite material according to either of the preceding claims, **characterized in that** the substrate (1) and the layer (2) are pretreated before the roll cladding.

3. Process for producing a composite material according to either of the preceding claims, **characterized in that** rolling takes place to a thickness of 0.1-6 mm before the solution annealing.

4. Process for producing a composite material according to one of the preceding claims, **characterized in that** the substrate (1) is a flat steel product having a thickness of 0.5 to 8 mm before the roll cladding.

5. Process for producing a composite material according to one of the preceding claims, **characterized in that** the layer (2) is a foil made of a hardenable copper alloy having a thickness of 0.05 to 3 mm before the roll cladding.

6. Process for producing a composite material according to one of the preceding claims, **characterized in that** the degree of forming of the foil during the roll cladding is approximately 30-90%.

7. Process for producing a composite material according to one of the preceding claims, **characterized in that** the soft annealing takes place in a bell-type furnace at annealing temperatures of 500-800°C for a period of 0.5-30 h or in a continuous furnace at annealing temperatures of 550-950°C for a period of 0.1-10 min.

8. Process for producing a composite material according to one of the preceding claims, **characterized in that** the layer (2) is hardened after the solution annealing.

9. Process for producing a composite material according to one of the preceding claims, **characterized in that** the layer (2) is hardened at a temperature of 300-600°C for a period of 1-20 h.

10. Process for producing a composite material according to one of the preceding claims, **characterized in that** the layer (2) is hardened in a bell-type furnace.

11. Process for producing a composite material according to one of the preceding claims, **characterized in that** the substrate (1) is not subjected to roll cladding with a layer (2) at least in certain portions.

12. Process for producing a composite material according to one of the preceding claims, **characterized in that** the substrate (1) is hardened by nitriding or nitrocarburizing at a temperature of between 380°C and 580°C over a time of 170 min in an NH₃ + N₂ atmosphere.

13. Process for producing a moulded friction body made of the composite material produced according to one of the preceding claims, comprising a substrate (1) and at least one layer (2) fixedly connected to the substrate (1), wherein
- the material of the substrate (1) is a steel material, wherein
- the material of the layer (2) is a hardenable copper alloy,
**characterized in that**
the precipitation hardening of the layer (2) combined with the surface hardening of the substrate (1) takes place after the composite material has been formed into the moulded friction body.

## Revendications

1. Procédé de fabrication d'un matériau composite, comprenant un support (1) et au moins un revêtement (2) fermement assemblé au support (1), dans lequel
- le matériau du support (1) est un matériau d'acier, dans lequel
- le matériau du revêtement (2) est un alliage de cuivre durcissable,
comprenant les étapes de procédé suivantes:
a) plaquage par laminage du revêtement (2) sur au moins un côté du support (1);
b) recuit d'adoucissement du produit intermédiaire obtenu suivant l'étape de procédé a);
c) recuit de mise en solution du produit intermédiaire obtenu suivant l'étape de procédé b),
**caractérisé en ce que** l'on effectue le recuit de mise en solution avec un refroidissement sous gaz protecteur ou dans l'eau ou dans l'huile.

2. Procédé de fabrication d'un matériau composite selon l'une quelconque des revendications précédentes, **caractérisé en ce que** l'on effectue un pré-traitement du support (1) et du revêtement (2) avant le plaquage par laminage.

3. Procédé de fabrication d'un matériau composite selon l'une quelconque des revendications précédentes, **caractérisé en ce que** l'on effectue un laminage à une épaisseur de 0,1 - 6 mm avant le recuit de mise en solution.

4. Procédé de fabrication d'un matériau composite selon l'une quelconque des revendications précédentes, **caractérisé en ce que** le support (1) est un produit plat en acier avec une épaisseur de 0,5 à 8 mm avant le plaquage par laminage.

5. Procédé de fabrication d'un matériau composite selon l'une quelconque des revendications précédentes, **caractérisé en ce que** le revêtement (2) est une feuille en un alliage de cuivre durcissable avec une épaisseur de 0,05 à 3 mm avant le plaquage par laminage.

6. Procédé de fabrication d'un matériau composite selon l'une quelconque des revendications précédentes, **caractérisé en ce que** le taux de déformation de la feuille pendant le plaquage par laminage vaut environ 30 - 90 %.

7. Procédé de fabrication d'un matériau composite selon l'une quelconque des revendications précédentes, **caractérisé en ce que** l'on effectue le recuit d'adoucissement dans un four à cloche à des températures de recuit de 500 - 800°C pendant une durée de 0,5 - 30 h ou dans un four continu à des températures de recuit de 550 - 950°C pendant une durée de 0,1 - 10 min.

8. Procédé de fabrication d'un matériau composite selon l'une quelconque des revendications précédentes, **caractérisé en ce que** l'on durcit le revêtement (2) après le recuit de mise en solution.

9. Procédé de fabrication d'un matériau composite selon l'une quelconque des revendications précédentes, **caractérisé en ce que** l'on effectue le durcissement du revêtement (2) à une température de 300 - 600°C pendant une durée de 1 - 20 h.

10. Procédé de fabrication d'un matériau composite selon l'une quelconque des revendications précédentes, **caractérisé en ce que** l'on effectue le durcissement du revêtement (2) dans un four à cloche.

11. Procédé de fabrication d'un matériau composite selon l'une quelconque des revendications précédentes, **caractérisé en ce que**, au moins localement, on ne plaque pas le support (1) par laminage avec un revêtement (2).

12. Procédé de fabrication d'un matériau composite selon l'une quelconque des revendications précédentes, **caractérisé en ce que** l'on effectue un durcissement du support (1) par nitruration ou nitrocarburation à une température comprise entre 380 et 580°C pendant une durée de 170 min sous une atmosphère NH₃ +N₂.

13. Procédé de fabrication d'un corps moulé de friction à partir du matériau composite fabriqué selon l'une quelconque des revendications précédentes comprenant un support (1) et au moins un revêtement (2) fermement assemblé au support (1), dans lequel
- le matériau du support (1) est un matériau d'acier, dans lequel
- le matériau du revêtement (2) est un alliage de cuivre durcissable,
**caractérisé en ce que** l'on effectue le durcissement par précipitation du revêtement (2) en combinaison avec le durcissement superficiel du support (1) après la déformation du matériau composite pour obtenir le corps moulé de friction.
